# EUROPEAN PATENT SPECIFICATION

(11) **EP 3 799 708 B1**
(45) Date of publication and mention of the grant of the patent: **12.06.2024**
(21) Application number: 20199733.5
(22) Date of filing: 02.10.2020
(51) Int. Cl.: A01B 59/00, A01B 59/04, A01B 59/048, A01B 59/06, A01B 63/02, B60G 17/005

(54) **AN AGRICULTURAL VEHICLE PROVIDED WITH A HITCH AND CONTROL MEANS FOR ADJUSTING THE HEIGHT OF THE HITCH**
LANDWIRTSCHAFTLICHES FAHRZEUG MIT EINER KOPPLUNG UND EINER STEUEREINRICHTUNG ZUR HÖHENVERSTELLUNG DER KOPPLUNG
VÉHICULE AGRICOLE DOTÉ D'UN ATTELAGE ET MOYENS DE COMMANDE DE RÉGLAGE DE LA HAUTEUR DE L'ATTELAGE

(30) Priority: 02.10.2019 IT 201900017726
(43) Date of publication of application: 07.04.2021
(73) Proprietor: CNH Industrial Italia S.p.A., 10156 Torino (IT)
(72) Inventor: HOLLINS, Richard, PEBMARSH, ESSEX C09 2NH (GB); VESCOVINI, Maurizio, 41012 Carpi (MO) (IT); CREA, Domenico, 41123 Modena (IT)
(74) Representative: CNH Industrial IP Department

(56) References cited:
- EP-A1- 2 502 766
- SU-A1- 1 220 936
- US-A1- 2003 085 042

## Description

### TECHNICAL FIELD

The present invention concerns an agricultural vehicle provided with a hitch and control means for adjusting the height of the hitch, as well as to a process for adjusting the same height of the hitch.

### BACKGROUND OF THE INVENTION

As known, agricultural vehicles are usually provided with a front hitch adjustable in height with respect to the soil.

The adjustment is normally performed via one or more controllable actuators adapted to move the arms of the hitch.

Thus, a user of one of these vehicles can conveniently attach implements to the hitch in lowered positions.

The command that allows the user to lower the hitch is normally placed outside of the agricultural vehicle cab, so that the user himself is able to see displacements of the hitch and to understand if the actual position of the hitch is suitable or not for the attachment of a specific implement.

In particular, the command is often a single button whose continuous pressure causes the lowering or raising of the hitch based on the current position thereof and at a constant speed.

If the hitch is at its allowable lowermost position, a continuous pressure of the button causes the raising of the hitch towards its allowable uppermost position. Otherwise, the lowering of the hitch is caused until the latter reaches the lowermost position above mentioned. EP2502766 discloses a vehicle with a raise control signal for raising the plow in draft control for elevating/lowering the plow based on a draw load value detected by a draw load sensor, whereas mode switching means suppresses or limits the suspension function, via control of the suspension control means to suppress an adverse event in which the front part of the traveling vehicle body is lifted upward.

In general, a need is felt to lower the hitch further, with respect to the soil, below the lowermost position allowed by the operation of the actuators.

An aim of the present invention is to satisfy the aforementioned need in a simple and comfortable manner for the user.

### SUMMARY OF THE INVENTION

Such an aim is reached by at least an agricultural vehicle and a method for adjusting the height of a hitch of the agricultural vehicle, as claimed in claims 1 and 11 respectively.

### BRIEF DESCRIPTION OF DRAWINGS

For a better understanding of the present invention, a preferred embodiment is described in the following, by way of a non-limiting example, with reference to the attached drawings, wherein:
- Figure 1 is a schematic representation of an agricultural vehicle according to the invention; and
- Figure 2 is a block diagram showing operating logics of a control system for adjusting the height of a hitch of the agricultural vehicle of Figure 1.

### DETAILED DESCRIPTION OF THE INVENTION

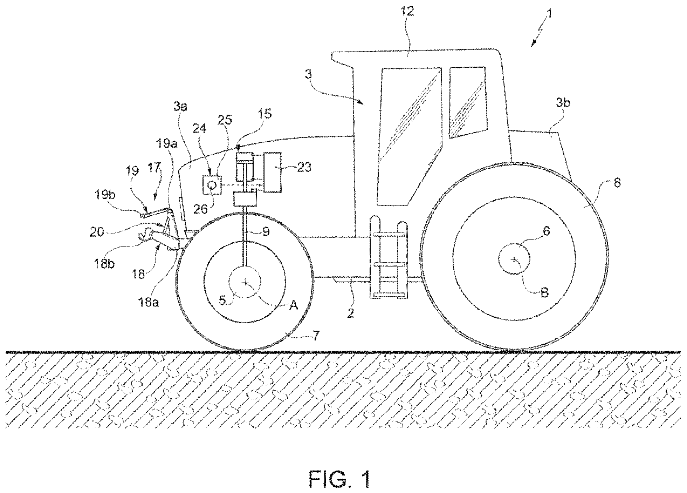

With reference to Figure 1, reference numeral 1 indicates an agricultural vehicle, in particular a tractor, having a chassis 2 and a covering vehicle body 3 with a front portion 3a and a rear portion 3b, according to a normal advancing direction of the vehicle 1.

The vehicle body 3 separates the interior of the vehicle 1 from the exterior thereof; more specifically, the front portion 3a comprises a cab 12 internally defining a passenger or user compartment, in which the vehicle 1 includes not-shown devices for driving the same, e.g. a steering wheel, an accelerator and a braking pedal, an ignition switch, and the like.

The vehicle 1 further has a front axle 5 and a rear axle 6, as well as a pair 7 of front wheels and a pair 8 of rear wheels 8, which are respectively fixed to the front axle 5 and the rear axle 6, and of which only one wheel for each pair 7 and 8 is shown in Figure 1.

The front axle 5 and the rear axle 6 extend respectively along two corresponding axes A, B, in particular horizontally oriented.

The vehicle 1 comprises, in addition, a front suspension 9 and a rear suspension (not shown) that couple, respectively, the front axle 5 and the rear axle 6 to the chassis 2 and, indirectly, to the front portion 3a and the rear portion 3b, respectively, in a movable manner.

The front suspension 9 comprises an actuator device 15, which is schematically illustrated in Figure 1, for controlling the relative position of the front axle 5 with respect to the front portion 3a.

The actuator device 15 moves the front portion 3a and the front axle 5 relatively to each other and between at least a close configuration and a spaced configuration, in which the front axle 5 is respectively nearer to and farther from the front portion 3a. In this manner, the front portion 3a can be arranged with respect to the soil at least in a raised position and in a lowered position, corresponding to the close and the spaced configuration, respectively.

In particular, the front portion 3a moves relatively to the front axle 5a along a vertical direction.

The front suspension 9 is a known kind of suspension; in particular, the front suspension 9 is known with the name of "adaptive suspension".

Furthermore, the vehicle 1 comprises a hitch 17 configured to allow the attachment of an implement (not shown). The hitch 17 is coupled to the chassis 2 in a movable manner with respect to the front portion 3a, such that the same hitch 17 can assume at least a lowered and a raised configuration with respect to the front portion 3a.

With greater detail, the hitch 17 is configured as what is commonly called a "three-point" hitch. In particular, the hitch 17 comprises two equal lower arms or linkages 18 (only one of which being shown in Figure 1) being horizontally offset to one another and being each pivotally coupled to the chassis at one end 18a.

Each lower arm 18 has, moreover, another end 18b opposite to the end 18a and carrying an attachment member useful for the attachment of the implement.

The hitch 17 further comprises an upper arm or linkage 19 being arranged horizontally between the lower links 18 and being pivotally coupled to the chassis 2 at one end 19a.

Similarly, to lower arms 18, the upper arm 19 has another end 19b opposite to the end 19a and carrying an attachment member useful for the attachment of the implement.

In order to reconfigure the hitch 17, the vehicle 1 comprises a further actuator device 20 configured to move the hitch 17 between the lowered and the raised configuration.

More precisely, the actuator device 20 includes two identical actuators (of which only one is shown in Figure 1) respectively coupled to the lower arms 18 at one side and both coupled to the chassis at the other side. Each actuator is adapted to exert a force on the respective lower arm 18, such that a pivoting torque is generated onto the same lower arm 18. Hence, each lower arm 18 can be pivoted between a first and a second position, in which the end 18b reaches respectively the lowermost and the uppermost position with respect to the front portion 3a.

On the other hand, in the embodiment shown, the upper arm 19 is coupled to the chassis 2 through a known mechanism (not shown), which is manually drivable under an action of the user for allowing the pivotal motion of the upper arm 19 itself.

Specifically, the lowered and the raised configuration of the hitch 17 are respectively defined by the ends 18b in their lowermost and uppermost positions.

In order to adjust the height of the hitch 17, the vehicle 1 comprises a control system for allowing a user of the vehicle 1 to command the actuator devices 15, 20.

According to an embodiment of the invention, the control system comprises a control unit 23 configured to control the actuator devices 15, 20 at different times under inputs generated by a single command 24, being part of the control system and operable by the user.

In other words, the control unit 23 is coupled to the command 24 and is configured to receive at least one signal from the command 24 any time an action is performed thereon. Then, the control unit 24 controls at least one of the actuator devices 15, 20 based on the signals received, in particular based on how the command 24 is operated by the user.

Preferably, the command 24 has a base 25 that is fixed with respect to the vehicle body 3 and arranged at the exterior of the vehicle 1, i.e. at the exterior of the passenger compartment defined by the cab 12. Specifically, the base 25 and the command 24 are fixed to the front portion 3a.

In particular, the command 24 comprises a button 26 that can be pressed and released by the user.

The command 24 generates a signal when the button 26 is pressed, whereas no signal is generated when the button 26 is released.

The control unit 23 controls one of the actuator devices 15, 20 in reply to a first action on the command 24 and controls also the other one in reply to a separate second action on the same command 24, provided that at least a relationship between a first time threshold and a time elapsed between the actions is satisfied.

In practice, the user needs at least to press the button 26 for two separate times in order to control both the actuator devices 15, 20 in a serial manner. Moreover, the button 26 shall be pressed for the second time before a given time has elapsed from the termination of the first pressure.

Hence, without any loss of generality, this time shall be shorter than the first time threshold, which is a fixed threshold; however, a suitable alternative could involve that the elapsed time should be larger than the same first time threshold.

Therefore, the control unit 23 is provided with a memory to store the first time threshold and with a clock to determine the time elapsed from the latest action performed on the command 24.

The control unit 23 is further configured to determine the arrangement of the hitch 17 relatively to the front portion 3a. For example, the control unit 23 is coupled to sensors (not shown) adapted to detect one or more quantities indicative of such arrangement of the hitch 17.

Similarly, the control unit 23 is further configured to determine the relative arrangement between the front axle 5 and the front portion 3a. For example, the control unit 23 is coupled to sensors (not shown) adapted to detect one or more quantities indicative of such relative arrangement between the front axle 5 and the front portion 3a.

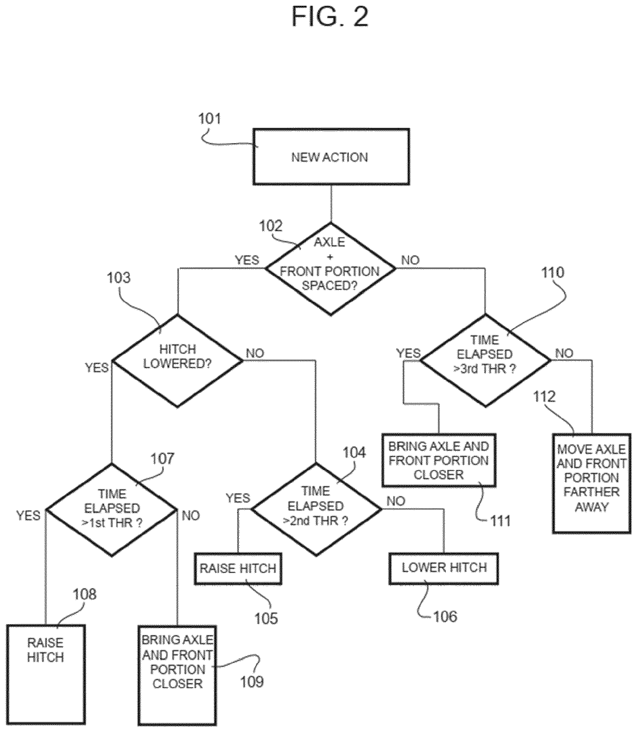

Making reference to Figure 2, which shows operating logics of the control system, with the front axle 5 and the front portion 3a in the spaced configuration (output YES of block 102), the control unit 23 will always control the actuator device 20, in reply to any new action (block 101) performed on the command 24, if the hitch 17 is in the raised configuration or, more in general, not in the lowered configuration (output NO of block 103).

Specifically, the control unit 23 will control the actuator device 20 for moving the hitch 17 while the command 24 is being operated. Hence, during the time in which the button 26 is held pressed, the lower arms 18 rotate, e.g. with a constant rate, by means of the respective actuators.

More specifically, while the command 24 is being operated, the ends 18b may move toward their lowermost or their uppermost positions, e.g. based on the time elapsed from the latest operation on the command 24. In particular, if the hitch 17 is not in the raised configuration and the time elapsed is greater than a second time threshold (output YES of block 104), stored in the control unit 23, the hitch 17 is moved toward the raised configuration (block 105); else (output NO of block 104), the hitch 17 is moved toward the lowered configuration (block 106).

Instead, the release of the button 26 causes the interruption of any movement of the hitch 17.

These principles, i.e. the mere control logics of the sole hitch 17 when not in the lowered configuration (the logics of blocks 104, 105, 106) by pressing a button (the button 26 in this case), are known in the art and therefore they are not explained in further detail for the sake of conciseness.

On the other hand, according to embodiments of the invention, the use of command 24 is not limited to the sole control of hitch 17 but also to the control of the relative position of the front portion 3a and the front axle 5, thanks to control unit 23.

More precisely, when the hitch 17 reaches the lowered configuration (output YES of block 103), e.g. after the end of a corresponding action on the command 24, the control unit 23 will wait for a new action (block 101) on the command 24 to select whether controlling the actuator device 15 or the actuator device 20.

The selection is based on the time elapsed from the end of the previous action: if the new action is performed before the time elapsed overcomes the first time threshold (output YES of block 107), the control unit 23 will control the actuator device 20 for raising the hitch 17 (block 108); otherwise (output NO of block 107), the control unit 23 will control the actuator device 15 to bring the front portion 3a and the front axle 5 closer together (block 109).

Therefore, the control unit 23 controls the actuator device 15 after having controlled the actuator device 20 only if the aforementioned relationship is satisfied and, additionally, if the hitch 17 is in the lowered configuration.

The actuator device 15 is then controlled by the control unit 23 while the command 24 is operated for the second time; in particular, the front portion 3a and the front axle 5 are moved from the spaced configuration toward the closer configuration, by means of the actuator device 15. More in particular, the front portion 3a is vertically lowered with respect to the front axle 5 and the soil.

In such a manner, also the hitch 17 is further lowered with respect to the soil.

When the front portion 3a and the front axle 5 are in the close configuration or, more in general, not in the spaced configuration (output NO of block 102), the control unit 23 will always control the actuator device 15 in reply to any new action (block 101) performed on the command 24.

Specifically, the control unit 23 will control the actuator device 15 for moving the front portion 3a relative to the front axle 5 while the command 24 is being operated.

Hence, during the time in which the button 26 is held pressed, the front portion 3a and the front axle 5 approach to or move further away from each other, e.g. based on the time elapsed from the latest operation on the command 24. In particular, if the front portion 3a and the front axle 5 are not in the close configuration and the time elapsed is shorter than a third time threshold (output NO of block 110), stored in the control unit 23, the front portion 3a and the front axle 5 themselves approach to each other (block 111); else (output YES of block 110), they move farther away from each other (block 112).

Again, the release of the button 26 causes the interruption of any movement of the front portion 3a relative to the front axle 5.

On the other hand, when the front portion 3a and the front axle 5 reach the spaced configuration (output YES of block 102) after the end of a corresponding action on the command 24, the control unit 23 will wait for a new action (block 101) on the command 24 to select whether controlling the actuator device 15 or the actuator device 20.

Again, the selection is based on the time elapsed from the end of the previous action: if the new action is performed before the time elapsed overcomes a further fixed time threshold, in particular coincident with the first time threshold (output NO of block 107), the control unit 23 will control the actuator device 15 to bring the front portion 3a and the front axle 5 closer together (block 108); otherwise, the control unit 23 will control the actuator device 20 for raising the hitch 17 (block 109).

In the following, a procedure is disclosed for adjusting the height of the hitch 17 when the latter is in the raised configuration and the front portion 3a is in the spaced configuration with the front axle 5.

The user reaches the command 24 at the outside of the passenger compartment defined by the cab 13; here, the user operates the command 24 for the first time, in particular in a continuous manner.

The command 24 generates, accordingly, a signal that is received by the control unit 23. The latter control unit 23 controls the actuator device 20 for lowering the hitch 17.

During the continuous operation of the command 24, the lower arms 18 are pivoted at a constant rate anticlockwise, such that the ends 18b reach their lowermost position.

At this time, the user temporarily stops the operation on the command 24 and then restarts a new operation thereon after a time lapse shorter than the fixed time threshold stored in the control unit 23.

A new signal is generated by the command 24, which is interpreted by the control unit 23 as a request of controlling the actuator device 15, i.e. as a request of lowering the front suspension 9.

Hence, during the continuous operation of the command 24 for the second time after the interruption, the control unit 23 controls the actuator device 15 to lower the front portion 3a with respect to the front axle 5, such that the front portion 3a and the front axle 5 reach the close configuration.

In this manner, the hitch 17 is at a lowermost position with respect to the soil and the user is able to attach an implement in a comfortable manner.

After that the implement is attached, the elapsed time is such that a new action on the command 24 will be interpreted by the control unit 23 as a request of raising the front suspension 9. Hence, during another continuous operation on the command 24, the control unit 23 restores the spaced configuration between the front portion 3a and the front axle 5, by controlling the actuator device 15 accordingly.

Here, the user stops again to operate the command 24 and waits for a little time, shorter than the further fixed time threshold stored in the control unit 23. Then, the user performs a new action onto the command 24 and the control unit 23 switches to the control of the actuator device 20 for raising the hitch 17.

Eventually, the user freely adjusts the height of the hitch 17 relative to the front portion 3a, and thus of the attached implement.

While the command 24 is not operated by the user, the latter can freely adjust also the position of the upper arm 19 by driving the dedicated mechanism.

In view of the foregoing, the advantages of the vehicle 1 and of the process for adjusting the height of the hitch 17, according to the invention, are apparent.

The user is able to lower the hitch 17 through not only the dedicated actuator device 20 and the mechanism for allowing the pivotal motion of the upper arm 19, but also by adjusting the height of the front suspension 9 via the control of the actuator device 15.

The control of both the actuator devices 15 and 20 is reached through the usage of the single command 24, which is favorably arranged at the outside of the passenger compartment defined by the cab 12, such that the user is able to see real-time the adjustment of the height of the hitch 17 relatively to the soil.

In such a manner, the user does not need to enter in the passenger compartment and look for a dedicated command to adjust the height of the front suspension 9, without seeing the result of the adjustment. Therefore, the operations of the user are extremely simple.

The use of the single button 26 is very comfortable and simple for the user, which needs only to pay attention to the time elapsed between two successive actions on the button 26.

According to a variant of the invention, the single command 24 is replaced by at least two separated commands, being each coupled to the control unit 23 and devoted to generate respective control signals for the actuator devices 15, 20. The separated commands are close to each other, at a distance sufficient for the user to operate them contemporary while standing in a single position. In particular, the two commands have respective bases fixed with respect to the front portion 3a at the exterior of the vehicle 1.

Even though the single command 24 is a more compact and simple solution to control both the actuator devices 15 and 20, with respect to the two separate commands, the latter offer to the user the same possibility of adjusting the height of both the hitch 17 and the front suspension 9 from a single position, which is favorably at the exterior of the vehicle 1.

Moreover, it is clear that further modifications can be made to the described vehicle 1, which do not extend beyond the scope of protection defined by the claims.

For example, the hitch 17 may be replaced by another hitch consisting of a single arm with an attachment end.

The button 26 of the command 24 may be replaced by another suitable member such as a lever, a selector with an integrated button, and the like. Based on the member of the command 24, it is possible to include the possibility of a mode of operating the command 24, such that the actuator devices 15 and 20 may be controlled contemporary.

The elapsed time between two following actions on the command 24 may be computed by the control unit 23 in a different manner. For instance, the reaching of the lowered configuration by the hitch 17 may be the starting point for evaluating the elapsed time, as well as the reaching of the spaced configuration by the front portion 3a and the front axle 5.

## Claims

1. an agricultural vehicle (1) comprising:
- a vehicle body (3) comprising a front portion (3a), according to a normal advancing direction of the agricultural vehicle (1), and defining an interior and an exterior of the agricultural vehicle (1);
- a hitch (17) relatively movable to the front portion (3a) between at least a first and a second configuration different to each other;
- an axle (5) relatively movable to the front portion (3a), such that the axle and the front portion themselves (5, 3a) can be relatively arranged according to at least a third and a fourth configuration, in which the front portion (3a) is respectively closer to and farther from the axle (5);
- a first actuator (20) controllable to bring the hitch (17) in the first and the second configuration;
- a second actuator (15) controllable to bring the axle (5) and the front portion (3a) in the third and the fourth configuration; and
- a control system comprising a single command (24) adapted to be operable by a user and a control unit (23) coupled to the command (24);
**characterized in that** the control unit is configured to control the first and the second actuator (20, 15) contemporary or at different times in reply to one or more actions performed on the command (24).

2. The agricultural vehicle of claim 1, wherein the command (24) has a base (25) fixed with respect to the vehicle body (3) and arranged at the exterior of the agricultural vehicle (1).

3. The agricultural vehicle of claim 1 or 2, wherein the control unit (23) is configured to control the first actuator (20) or the second actuator (15) at different times, based on how the command (24) is operated.

4. The agricultural vehicle of any of the foregoing claims, wherein the control unit (23) is configured to:
- control one actuator between the first and the second actuator (20, 15) when a first action is performed on the command (24); and
- control the other actuator between the first and the second actuator (20, 15) when a second action is performed on the command (24);
if at least an elapsed time between the first and the second action satisfies a relationship with a fixed time threshold.

5. The agricultural vehicle of claim 4, wherein the relationship is satisfied if the elapsed time is shorter than the fixed time threshold.

6. The agricultural vehicle of claim 4 or 5, wherein said one actuator is the first actuator (20) and wherein the control unit (23) is further configured to determine the arrangement of the hitch (17) and to control said other actuator if, additionally, the hitch (17) is the second configuration.

7. The agricultural vehicle of claim 4 or 5, wherein said one actuator is the second actuator (15) and wherein the control unit (23) is further configured to determine the arrangement of the axle (5), relatively to the front portion (3a), and to control said other actuator if, additionally, the axle (5) and the front portion (3a) are in the fourth configuration.

8. The agricultural vehicle of any of the foregoing claims 4 to 7, wherein the control unit (23) is further configured to control the first actuator (20), such that the hitch (17) is brought from the first configuration to the second configuration, when said first action is performed involving a continuous operation of the command (24) until the hitch (17) reaches the second configuration.

9. The agricultural vehicle of any of the foregoing claims, wherein the hitch (17) comprises at least one arm (18) having an attachment end (18b) for the attachment of an agricultural implement;
wherein the attachment end (18b) is movable between an uppermost and a lowermost position, with respect to the front portion (3a), and stands in the lowermost position when the hitch (17) stands in the second configuration.

10. The agricultural vehicle of any of the foregoing claims 3 to 9, wherein the control unit (23) is configured to:
- control the first actuator (20) when the hitch (17) is in the first configuration and when the front portion and the front axle (3a, 5) are in the fourth configuration, in reply to any action performed on the command (24); and
- control the second actuator (15) when the hitch (17) is in the second configuration and a further action is performed on the command (24) after an elapsed time from the conclusion of the latest preceding action or from an instant in which the hitch (17) reached the second configuration, if said elapsed time satisfies a relationship with a fixed time threshold.

11. A method for adjusting the height of the hitch (17) of an agricultural vehicle (1) according to claim 10, the method comprising the steps of:
i) controlling the first actuator (20) when the hitch (17) is in the first configuration, by performing a third action on the command (24), such that the hitch (17) is brought in the second configuration; and
ii) controlling the second actuator (15) when the hitch (17) is in the second configuration by performing a fourth action on the command (24) while said elapsed time satisfies the relationship.

## Patentansprüche

1. Landwirtschaftliches Fahrzeug (1) mit:
- einem Fahrzeugaufbau (3) mit einem vorderen Abschnitt (3a) gemäß einer normalen Fortbewegungsrichtung des landwirtschaftlichen Fahrzeugs (1), der einen Innenraum und eine Außenseite des landwirtschaftlichen Fahrzeugs (1) definiert;
- einer Aufnahme (17), die relativ zu dem vorderen Abschnitt (3a) zwischen zumindest einer ersten und einer zweiten Konfiguration bewegbar ist, die sich voneinander unterscheiden;
- einer Achse (5), die relativ zu dem vorderen Abschnitt (3a) derart bewegbar ist, dass die Achse und der vordere Abschnitt (5, 3a) selbst in zumindest einer dritten und einer vierten Konfiguration relativ zueinander angeordnet werden können, in denen der vordere Abschnitt (3a) näher an beziehungsweise weiter entfernt von der Achse (5) ist;
- einer ersten Betätigungseinrichtung (20), die zum Versetzen der Aufnahme (17) in die erste und in die zweite Konfiguration steuerbar ist;
- einer zweiten Betätigungseinrichtung (15), die zum Versetzen der Achse (5) und des vorderen Abschnitts (3a) in die dritte und in die vierte Konfiguration steuerbar ist; und
- einem Steuersystem, das eine einzige Eingabeeinrichtung (24), die dazu ausgebildet ist, von einem Bediener bedienbar zu sein, und eine Steuereinheit (23) umfasst, die mit der Eingabeeinrichtung (24) gekoppelt ist;
**dadurch gekennzeichnet, dass** die Steuereinheit dazu eingerichtet ist, die erste und die zweite Betätigungseinrichtung (20, 15) gleichzeitig oder zu unterschiedlichen Zeitpunkten in Reaktion auf eine oder mehrere an der Eingabeeinrichtung (24) ausgeführten Handlungen zu steuern.

2. Landwirtschaftliches Fahrzeug nach Anspruch 1, wobei die Eingabeeinrichtung (24) einen Grundkörper (25) aufweist, der bezüglich des Fahrzeugaufbaus (3) fixiert ist und der an der Außenseite des landwirtschaftlichen Fahrzeugs (1) angeordnet ist.

3. Landwirtschaftliches Fahrzeug nach Anspruch 1 oder 2, wobei die Steuereinheit (23) dazu eingerichtet ist, die erste Betätigungseinrichtung (20) oder die zweite Betätigungseinrichtung (15) zu unterschiedlichen Zeitpunkten basierend auf der Art und Weise, wie die Eingabeeinrichtung (24) betätigt wird, zu steuern.

4. Landwirtschaftliches Fahrzeug nach einem der vorhergehenden Ansprüche, wobei die Steuereinheit (23) eingerichtet ist zum:
- Steuern einer Betätigungseinrichtung aus der ersten und der zweiten Betätigungseinrichtung (20, 15), wenn eine erste Handlung an der Eingabeeinrichtung (24) ausgeführt wird; und
- Steuern der anderen Betätigungseinrichtung aus der ersten und der zweiten Betätigungseinrichtung (20, 15), wenn eine zweite Handlung an der Eingabeeinrichtung (24) ausgeführt wird;
wenn zumindest eine verstrichene Zeit zwischen der ersten und der zweiten Handlung eine Beziehung zu einem festgelegten Zeitgrenzwert erfüllt.

5. Landwirtschaftliches Fahrzeug nach Anspruch 4, wobei die Beziehung erfüllt ist, wenn die verstrichene Zeit kürzer als der festgelegte Zeitgrenzwert ist.

6. Landwirtschaftliches Fahrzeug nach Anspruch 4 oder 5, wobei die eine Betätigungseinrichtung die erste Betätigungseinrichtung (20) ist und wobei die Steuereinheit (23) des Weiteren dazu eingerichtet ist, die Anordnung der Aufnahme (17) zu bestimmen und die andere Betätigungseinrichtung zu steuern, wenn die Aufnahme (17) sich zusätzlich in der zweiten Konfiguration befindet.

7. Landwirtschaftliches Fahrzeug nach Anspruch 4 oder 5, wobei die eine Betätigungseinrichtung die zweite Betätigungseinrichtung (15) ist und wobei die Steuereinheit (23) des Weiteren dazu eingerichtet ist, die Anordnung der Achse (5) relativ zu dem vorderen Abschnitt (3a) zu bestimmen und die andere Betätigungseinrichtung zu steuern, wenn die Achse (5) und der vordere Abschnitt (3a) sich zusätzlich in der vierten Konfiguration befinden.

8. Landwirtschaftliches Fahrzeug nach einem der vorhergehenden Ansprüche 4 bis 7, wobei die Steuereinheit (23) des Weiteren dazu eingerichtet ist, die erste Betätigungseinrichtung (20) derart zu steuern, dass die Aufnahme (17) von der ersten Konfiguration in die zweite Konfiguration gebracht wird, wenn die erste ausgeführte Handlung eine kontinuierliche Betätigung der Eingabeeinrichtung (24) umfasst, bis die Aufnahme (17) die zweite Konfiguration erreicht.

9. Landwirtschaftliches Fahrzeug nach einem der vorhergehenden Ansprüche, wobei die Aufnahme (17) mindestens einen Arm (18) mit einem Befestigungsende (18b) für die Anbringung eines landwirtschaftlichen Arbeitsgeräts umfasst;
wobei das Befestigungsende (18b) zwischen einer obersten und einer untersten Position bezüglich des vorderen Abschnitts (3a) bewegbar ist und sich in der untersten Position befindet, wenn die Aufnahme (17) sich in der zweiten Konfiguration befindet.

10. Landwirtschaftliches Fahrzeug nach einem der vorhergehenden Ansprüche 3 bis 9, wobei die Steuereinheit (23) eingerichtet ist zum:
- Steuern der ersten Betätigungseinrichtung (20), wenn die Aufnahme (17) sich in der ersten Konfiguration befindet und wenn der vordere Abschnitt und die Vorderachse (3a, 5) sich in der vierten Konfiguration befinden, in Reaktion auf eine beliebige an der Eingabeeinrichtung (24) ausgeführte Handlung; und
- Steuern der zweiten Betätigungseinrichtung (15), wenn die Aufnahme (17) sich in der zweiten Konfiguration befindet und eine weitere Handlung an der Eingabeeinrichtung (24) ausgeführt wird nach einer verstrichenen Zeit ab der Beendigung der letzten vorangegangenen Handlung oder ab einem Zeitpunkt, zu dem die Aufnahme (17) die zweite Konfiguration erreicht hat, wenn die verstrichene Zeit eine Beziehung zu einem festgelegten Zeitgrenzwert erfüllt.

11. Verfahren zum Verstellen der Höhe der Aufnahme (17) eines landwirtschaftlichen Fahrzeugs (1) nach Anspruch 10, wobei das Verfahren die folgenden Schritte umfasst:
- i) Steuern der ersten Betätigungseinrichtung (20), wenn die Aufnahme (17) sich in der ersten Konfiguration befindet, durch Ausführen einer dritten Handlung an der Eingabeeinrichtung (24) derart, dass die Aufnahme (17) in die zweite Konfiguration gebracht wird; und
- ii) Steuern der zweiten Betätigungseinrichtung (15), wenn die Aufnahme (17) sich in der zweiten Konfiguration befindet, durch Ausführen einer vierten Handlung an der Eingabeeinrichtung (24), solange die verstrichene Zeit die Beziehung erfüllt.

## Revendications

1. Véhicule agricole (1) comprenant :
- une carrosserie (3) comprenant une partie avant (3a), selon un sens de circulation normal du véhicule agricole (1), et définissant un intérieur et un extérieur du véhicule agricole (1) ;
- un attelage (17) relativement mobile par rapport à la partie avant (3a) entre au moins une première et une seconde configurations différentes l'une de l'autre ;
- un essieu (5) relativement mobile par rapport à la partie avant (3a), de telle sorte que l'essieu et la partie avant eux-mêmes (5, 3a) peuvent être agencés relativement selon au moins une troisième et une quatrième configurations, dans lesquelles la partie avant (3a) est respectivement plus proche et plus éloignée de l'essieu (5) ;
- un premier actionneur (20) contrôlable pour amener l'attelage (17) dans les première et seconde configurations ;
- un second actionneur (15) contrôlable pour amener l'essieu (5) et la partie avant (3a) dans les troisième et quatrième configurations ; et
- un système de commande comprenant une commande unique (24) adaptée pour être actionnable par un utilisateur et une unité de commande (23) couplée à la commande (24) ;
**caractérisé en ce que** l'unité de commande est configurée pour contrôler les premier et second actionneurs (20, 15) simultanément ou à des moments différents en réponse à une ou plusieurs actions effectuées au niveau de la commande (24).

2. Véhicule agricole selon la revendication 1, dans lequel la commande (24) présente une base (25) fixe par rapport à la carrosserie (3) et disposée à l'extérieur du véhicule agricole (1).

3. Véhicule agricole selon la revendication 1 ou la revendication 2, dans lequel l'unité de commande (23) est configurée pour contrôler le premier actionneur (20) ou le second actionneur (15) à des moments différents, en fonction de la manière dont la commande (24) est actionnée.

4. Véhicule agricole selon l'une quelconque des revendications précédentes, dans lequel l'unité de commande (23) est configurée pour :
- contrôler un actionneur entre les premier et second actionneurs (20, 15) lorsqu'une première action est effectuée sur la commande (24) ; et
- contrôler l'autre actionneur entre les premier et second actionneurs (20, 15) lorsqu'une deuxième action est effectuée sur la commande (24) ;
si au moins un temps écoulé entre la première et la deuxième action satisfait une relation avec un seuil de temps fixé.

5. Véhicule agricole selon la revendication 4, dans lequel la relation est satisfaite si le temps écoulé est inférieur au seuil de temps fixé.

6. Véhicule agricole selon la revendication 4 ou la revendication 5, dans lequel ledit actionneur désigne le premier actionneur (20) et dans lequel l'unité de commande (23) est en outre configurée pour déterminer la disposition de l'attelage (17) et pour contrôler ledit autre actionneur si, en outre, l'attelage (17) correspond à la seconde configuration.

7. Véhicule agricole selon la revendication 4 ou la revendication 5, dans lequel ledit actionneur désigne le second actionneur (15) et dans lequel l'unité de commande (23) est en outre configurée pour déterminer la disposition de l'essieu (5) par rapport à la partie avant (3a), et pour contrôler ledit autre actionneur si, en outre, l'essieu (5) et la partie avant (3a) correspondent à la quatrième configuration.

8. Véhicule agricole selon l'une quelconque des revendications 4 à 7 précédentes, dans lequel l'unité de commande (23) est en outre configurée pour contrôler le premier actionneur (20), de telle sorte que l'attelage (17) est amené de la première configuration à la seconde configuration, lorsque ladite première action est effectuée en impliquant un fonctionnement continu de la commande (24) jusqu'à ce que l'attelage (17) atteigne la seconde configuration.

9. Véhicule agricole selon l'une quelconque des revendications précédentes, dans lequel l'attelage (17) comprend au moins un bras (18) ayant une extrémité de raccordement (18b) pour l'attelage d'un outil agricole ;
dans lequel l'extrémité de raccordement (18b) est mobile entre une position la plus haute et une position la plus basse, par rapport à la partie avant (3a), et se trouve dans la position la plus basse lorsque l'attelage (17) se trouve dans la seconde configuration.

10. Véhicule agricole selon l'une quelconque des revendications 3 à 9, dans lequel l'unité de commande (23) est configurée pour :
- contrôler le premier actionneur (20) lorsque l'attelage (17) est dans la première configuration et lorsque la partie avant et l'essieu avant (3a, 5) sont dans la quatrième configuration, en réponse à toute action effectuée sur la commande (24) ; et
- contrôler le second actionneur (15) lorsque l'attelage (17) est dans la seconde configuration et qu'une nouvelle action est effectuée sur la commande (24) après un temps écoulé depuis la conclusion de la dernière action précédente ou à partir d'un moment où l'attelage (17) a atteint la seconde configuration, si ledit temps écoulé a un lien avec un seuil de temps fixé.

11. Procédé de réglage de la hauteur de l'attelage (17) d'un véhicule agricole (1) selon la revendication 10, le procédé comprenant les étapes de :
i) contrôle du premier actionneur (20) lorsque l'attelage (17) est dans la première configuration, en effectuant une troisième action sur la commande (24), de telle sorte que l'attelage (17) est amené dans la seconde configuration ; et
ii) contrôle du second actionneur (15) lorsque l'attelage (17) est dans la seconde configuration, en effectuant une quatrième action sur la commande (24) tandis que ledit temps écoulé satisfait la relation.
